# EUROPEAN PATENT SPECIFICATION

(11) **EP 1 338 952 B1**
(45) Date of publication and mention of the grant of the patent: **06.08.2008**
(21) Application number: 03250753.5
(22) Date of filing: 06.02.2003
(51) Int. Cl.: G06F 3/12

(54) **Email based printer systems**
Auf elektronische Post basierende Druckersysteme
Systèmes d'impression basés sur courrier électronique

(30) Priority: 19.02.2002 US 77016
(43) Date of publication of application: 27.08.2003
(73) Proprietor: Ricoh Company, Ltd., Tokyo 143-8555 (JP)
(72) Inventor: Nuggehalli, Jayasimha, San Jose, CA 95131-1817 (US); Sato, Tomotoshi c/o Ricoh Company Ltd.,, Tokyo 143-8555 (JP); Wei, Ke, San Jose, CA 95131-1817 (US)
(74) Representative: Leeming, John Gerard

(56) References cited:
- EP-A- 0 950 969
- EP-A- 1 056 247
- EP-A- 1 103 886
- EP-A- 1 109 113
- PATENT ABSTRACTS OF JAPAN vol. 1999, no. 11, 30 September 1999 (1999-09-30) -& JP 11 161457 A (FUJI XEROX CO LTD), 18 June 1999 (1999-06-18)

## Description

The present invention is related to printing systems, which can receive an electronic mail (email) including an attachment, convert the attachment from an application format into a printing data language format, and print the attachment.

Email is increasingly being used as an effective way of communicating. For example, it is possible to email someone a document or image by simply "attaching" the document or image to an email message. The user who receives the email may then open the attachment with the appropriate software application. That is, if the attachment was created with MICROSOFT WORD, the attachment will be opened using MICROSOFT WORD (note, if the proper software application is not available on the recipient's computer, a dialog will be displayed requesting the user to select another software application). Once the attachment is opened, the user may then print the file by using the print options associated with the software application.

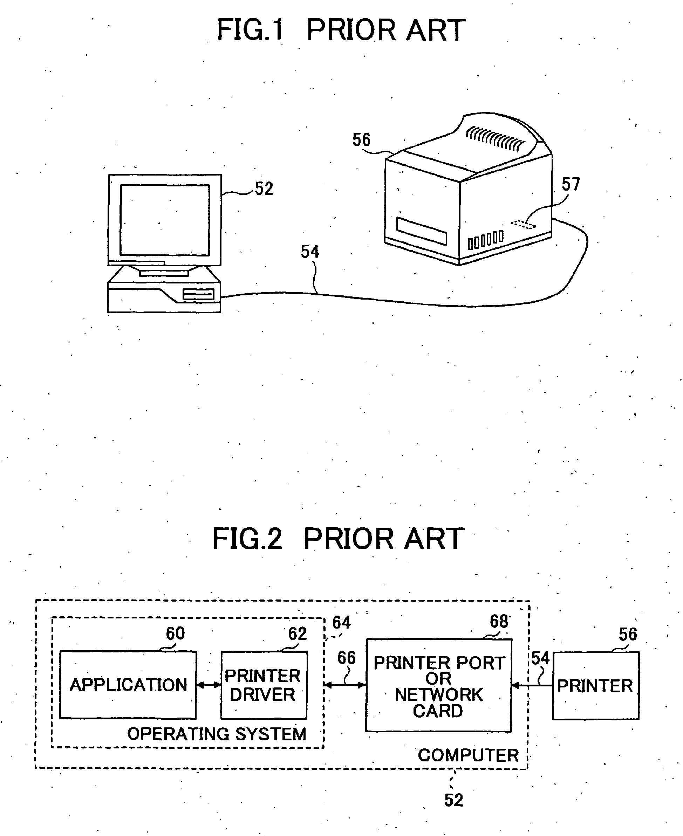

However, to print the attachment, an appropriate printer driver must first be installed onto the computer. In more detail, Figure 1 illustrates a conventional set-up of a computer 52 and a printer 56 attached via a cable and/or other network 54. The printer 56 includes a connection port 57 for attaching the cable and/or other network 54 to the printer 56. Thus, a user using the computer 52 can select an item or other object to be printed on the printer 56.

Figure 2 illustrates a block diagram of a conventional application 60 interfacing the printer 56. The conventional application 60 is hosted on an operating system 64 resident on the computer 52. When the user invokes a print command from the application 60, the document or other item to be printed is communicated to a printer driver 62. The printer driver 62 is a printer and operating system specific software interface. The operating system 64 sends signals in accordance with instructions from the printer driver 62 to the printer port and/or network card 68 via a connection 66, thus placing signals corresponding to the document or other item to be printed on the cable and/or other network 54 connected to the printer 56.

However, a problem with this configuration is the computer 52 must have a printer driver 62 that specifically corresponds to the printer 56. This is problematic because a user may print an item on a printer which is at a completely different location than the user (i.e., via the Internet/Intranet). That is, regardless of the user's location, the destination computer must still have the specific printer driver installed therein. Thus, the user must know the type of printer.

This results in the user having to continuously update the computer with the appropriate printer drivers. In addition, having several print drivers installed on a computer significantly decreases the amount of available memory.

Further, even if the proper printer driver is installed on the computer, it is very cumbersome to print several attachments included with the email. That is, the user must first open an attachment, print the attachment, close the attachment, open the next attachment and so on. This is extemely cumbersome, especially because there is no notification from the computer about whether or not a respective attachment was successfully printed. In addition, if one attachment is formed using MICROSOFT WORD and another attachment is a Portable Document Format (PDF) file, the computer must have both MICROSOFT WORD and ADOBE, for example, installed on the computer.

Additionally, there are currently available several small handheld computers which allow the user to receive emails while traveling, for example. The user in this instance may wish to print (while traveling) a file at his or her home or office location. However, to do this, the small handheld computer needs the appropriate printer driver as discussed above. This is particularly disadvantageous because the small handheld computer generally has less available memory than a general purpose computer.

EP-1 056 247-A discloses a printing system for e-mail in which an application converts application data received via e-mail to print data and then sends them via a communication network to a remote printer.

JP-A-11-161,457 discloses an information output device that receives electronic mails and converts the contents thereof and any attachments to bit map data.

Accordingly, one object of the present invention is to solve the above-noted and other problems.

Another object of the present invention is to provide a print system which can easily print electronic mail and associated attachments.

According to the present invention, there is provided a printer comprising:
a receiving module configured to receive from an e-mail server an electronic mail having at least one attachment in one of a set of application formats;
a downloading module configured to download from said email server the at least one attachment of the e-mail received by said receiving module;
a converting module configured to convert the at least one attachment downloaded by the downloading module from an application format; and
a printing module configured to print the at least one attachment converted into a printing data language format; characterised in that:
   the converting module is configured to convert the at least one attachment into the printing data language format; and by:
      a determining module configured to determine whether or not the at least one attachment can be converted using the converting module of the printer; and
      a HTTPS module configured to transfer the at least one attachment to/from an application service provider external to the printer so as to convert the at least one attachment into the printing data language format if the determining module determines the at least one attachment cannot be converted by the converting module .

A more complete appreciation of the invention and many of the attendant advantages thereof will be readily obtained as the same becomes better understood by reference to the following detailed description when considered in connection with the accompanying drawings, wherein:
Figure 1 is an overview illustrating a conventional computer connected to a printer,
Figure 2 is a block diagram illustrating functional components and data passed between a software application and a printer,
Figure 3 is an overview illustrating a computer connected to a printer via the Internet/Intranet;
Figure 4 is a block diagram of printer modules included with a printer according to a first example of the present invention;
Figure 5 illustrates a computer connected to a printer via the Internet/Intranet, and an associated application service provider,
Figure 6 is a block diagram of printer modules included with a printer according to a second example of the present invention; and
Figure 7 is a flowchart illustrating processes performed by the printer modules according to the present invention.

### DESCRIPTION OF THE PREFERRED EMBODIMENTS

According to the present invention, a user can send an email including an attachment directly to a printer so as to print the email and/or the attachment. Thus, the user's computer does not need specific printer drivers to convert the files into a print ready format. That is, a user may email a document, such as a WORDPERFECT document, as an email attachment directly to the printer so as to print the document.

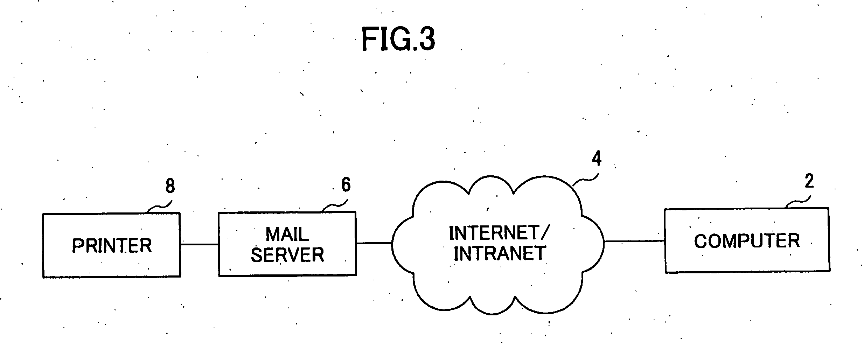

Referring now to the drawings, wherein like reference numerals designate identical or corresponding parts throughout the several views, the present invention will be described. Figure 3 illustrates one example of the present invention, in which a computer 2 is connected to a printer 8 via the mtemet/Intranet 4 and a mail server 6. In this example, a user using the computer 2 may directly send an email including an attachment to the printer 8 via the Internet/Intranet 4 and mail server 6. The printer 8 then receives the electronic mail including the attachment, downloads the attachment from the email server 6, and converts the attachment from an application format into a printing data language format. The printer 8 then prints the attachment converted into the printing data language format.

Further, the printer 8 must be configured to have an email address. A new email account may be created for the printer 8 on the mail server 6 through conventional methods. The email account, password and mail server IP address information may then be stored in the printer using the menu system provided on the front panel of the printer, for example. Other possible ways of configuring the printer 8 to have an email address are through the embedded web server on the printer 8 or by telnetting the printer 8 to set the email address of the printer 8. Basically, an email address for the printer 8 is set in substantially the same fashion as an email address would be set up on a computer.

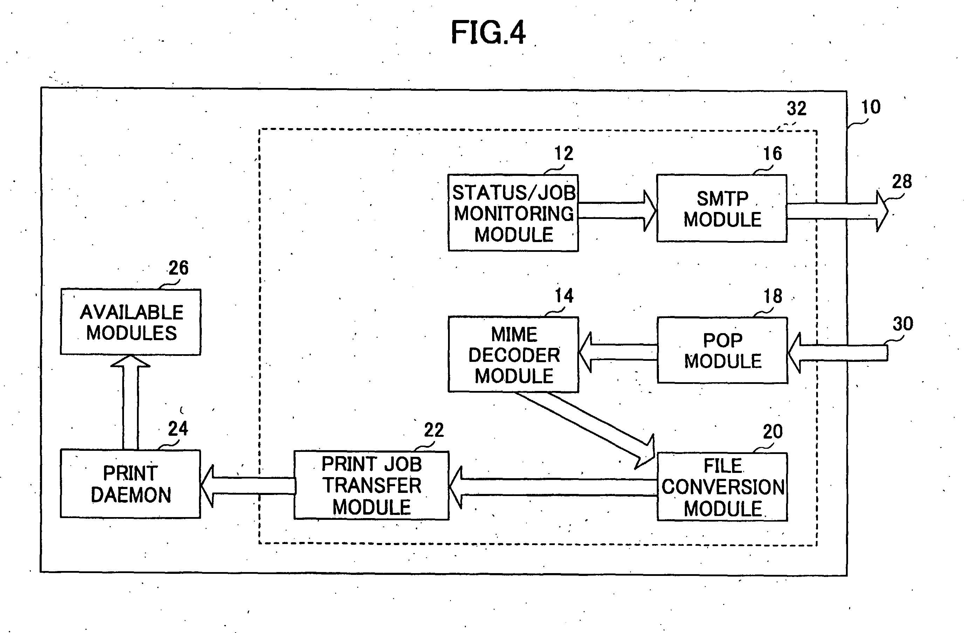

Turning now to Figure 4, which illustrates a block diagram of printer modules 10 included with the printer 8 according to the present invention. As shown, the printer modules 10 include additional modules 32, standard available modules 26 and a print daemon 24. The additional modules 32 may be installed on the printer already purchased or may be installed during the initial manufacture of the printer. Thus, the present invention is also applicable to printers that are already installed into existing networks. The standard available modules 26 include modules such as Postscript and PCL (Printer Control Language) modules.

As shown, the additional modules 32 include a status/job monitoring module 12, a Simple Mail Transfer Protocol (SMPT) module 16, a Post Office Protocol (POP) module 18, a Multipurpose Internet Mail Extension (MIME) module 14, a file conversion module 20, and print transfer module 22. The POP module 18 receives an electronic mail including at least one attachment from the email server 6 (see Fig. 3) via an input 30. That is, the POP module 18 operates in a continuous loop and awaits a print request sent from a user. Once the POP module 18 receives the request, the POP module 18 downloads the attachment from the email server 6. The MIME decoder module 14 then decodes the downloaded attachment from an email format (e.g., using multipurpose Internet mail extensions), and the file conversion module 20 converts the attachment from an application format into a printing data language (PDL) format.

The application format may be a document format, such as one created using known word processing applications including WORDPERFECT, MICROSOFT WORD, may be a spreadsheet format created using EXCEL, for example, or may be an image format including PDF files created using ADOBE ACROBAT, for example, or JPEG files. That is, the application format may be any format used to create the attachment. After the email and/or attachment(s) are converted into a printable language, the print job transfer module 22 transfers the email and/or the attachment(s) as a print request to a print daemon 24 running on the printer such that the email and/or attachment(s) are printed using a standard print interpreting module included with the available modules 26 of the printer. Thus, the additional modules 32 may be directly installed into a printer without having to modify the standard available modules 26.

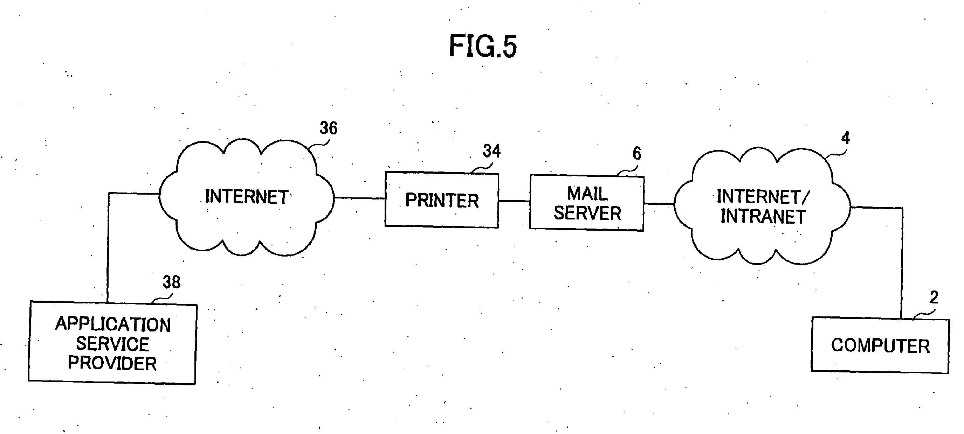

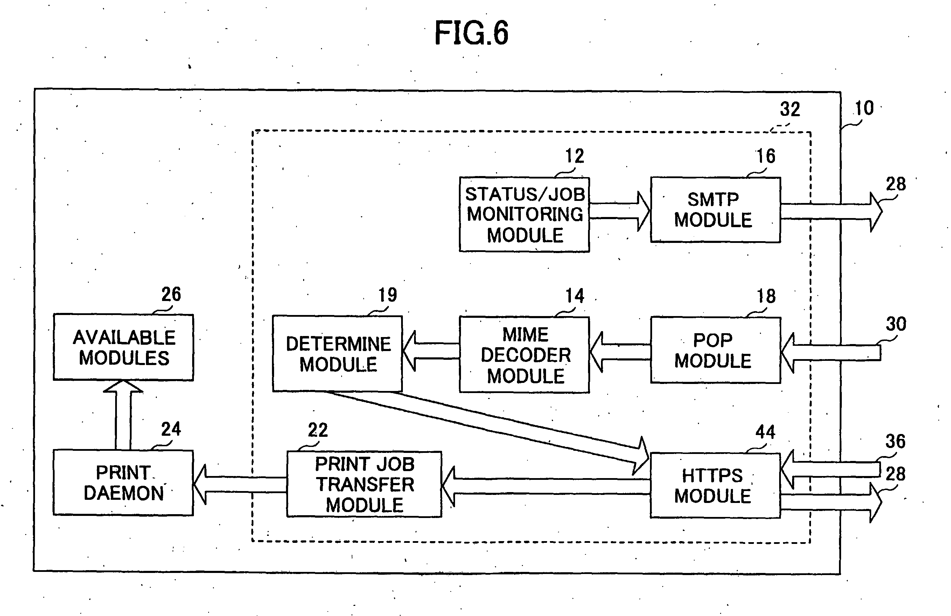

Turning now to Figures 5 and 6, which illustrate another example of a printing system according to the present invention. In more detail, Figure 5 is similar to Figure 3, but illustrates a printer 34 associated with an application service provider 38 via the Internet 36. The printer 34 is similar to the printer 8 illustrated in Figure 3, but includes a Hyper Text Transfer Protocol Source (HTTPS) module 44 (see Figure 6), rather than the file conversion module 20 shown in Figure 4. Also included is a determine module 19 which determines whether or not the email and/or attachments may be printed using a local file conversion module (such as the file conversion module 20 shown in Figure 4) or an outside server is required. The determine module 19 may be developed using a computer program language such as C++ and be configured to determine the application format of the email and/or attachment and to search the printer memory area (not shown) to determine whether or not the appropriate file conversion module exists on the printer.

If the determine module 19 determines the email and/or attachment(s) cannot be converted using an existing conversion module included in the printer modules 10, the determine module 19 instructs the HTTPS module 44 to establish a secure connection between the printer 34 and an application service provider (ASP) 38. The determine module 19 then uploads (transfers) the email and/or attachment(s) to the application service provider 38 via the internet (shown as arrow 28 in Figure 6). The application service provider 38 then converts the email and/or attachment(s) from the application format into a printing data language format. Next, the application service provider 38 downloads (transfers) the converted email and/or attachment(s) to the printer 34 as illustrated by the arrow 36 in Figure 6. Then, the same processes shown in Figure 4 are performed. That is, the print transfer module 22 transfers the converted email and/or attachment(s) to the print daemon 24 running on the printer 34 such that the email and/or attachment(s) are printed using a standard print interpreting module included in the available modules 26 of the printer 34.

In this second example of the present invention, the printer 34 does not need to contain several different file conversion modules (e.g., for converting WORDPERFECT files, JPEG files, PDF files, etc.), but rather may use an application service provider to perform this function. Therefore, available memory space on the printer 8 may be saved (i.e., it is not necessary to store several different file conversion modules).

In addition, in both Figures 4 arid 6, the printer modules 10 include the status/job monitoring module 12 and SMTP module 16. These modules are used to monitor a status of a print request, and to notify a user who sent the electronic email whether or not the print request was successful. Further, the status/job monitoring module 12 uses a Simple Mail Transfer Protocol (i.e., the SMTP module) to notify the user about whether or not the print job was successful.

Further, the SMTP, MIME, POP and HTTPS modules are standard protocol modules which are available as open source, Thus, the open source may be installed onto the printer hardware/software platform. The determine module 19 (shown in Figure 6) and print transfer module 22 (shown in Figures 4 and 6) may be developed using an appropriate software computer language C++, etc. as discussed above.

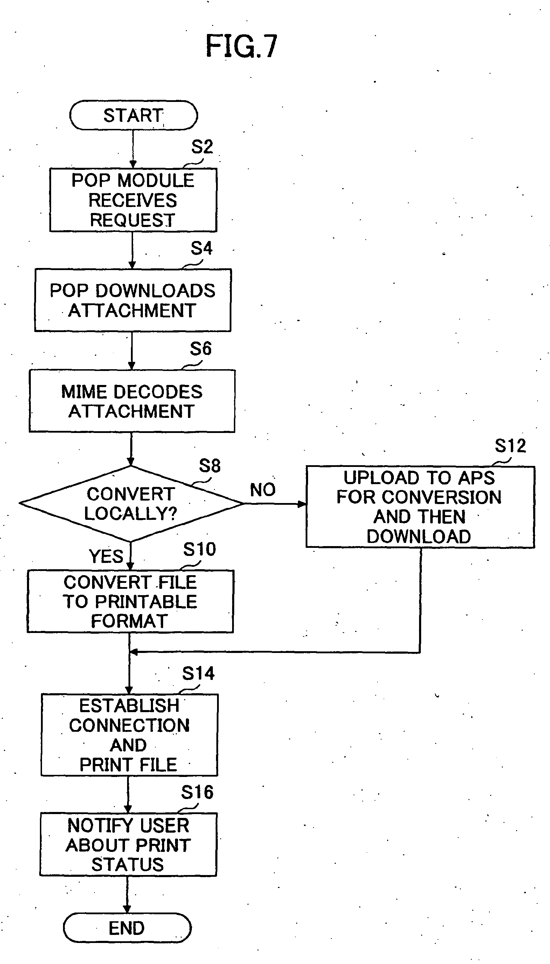

Turning now to Figure 7, which is a flowchart illustrating an overall process of the printer modules according to the present invention. In more detail, the POP module 10 receives an email including at least one attachment from an email server (step S2), and then downloads the email and/or attachment (step S4). The MIME module 14 decodes the attachment (step S6) and the determine module 19 determines in Step S8 whether or not the downloaded attachment(s) can be converted locally (i.e., with a file conversion module included in the printer). If it is determined the email and/or attachment(s) cannot be converted by a converting module included with the printer (No in step S8), the determine module 19 transfers the decoded email and/or attachment(s) using the HTTPS module 44 to/from an application service provider external to the printer for the necessary conversion (step S12). Alternatively, if the determine module 19 determines the decoded email and/or attachment can be converted using a file conversion module included with the printer (Yes in step S8), the decoded attachment is converted locally on the printer (step S10).

Then, in step S14, the print job transfer module 22 establishes a connection with the print demon 24 so as to print the email and/or attachment(s). The status/job monitoring module 12 and SMTP module 16 then notify the user about whether or not the print request was performed successfully (step S16).

Figures 4 and 6 illustrate the converted files being printed via the print daemon 24. However, it is also possible to transfer the converted files directly to the available modules 26 for printing. This requires modification of the additional modules 32 and available modules 26 so they may directly interface with each other modified so that they directly interface with the additional modules 32.

This invention may be conveniently implemented using a conventional general purpose digital computer or microprocessor programmed according to the teachings of the present specification, as will be apparent to those skilled in the computer art. Appropriate software coding can readily be prepared by skilled programmers based on the teachings of the present disclosure; as will be apparent to those skilled in the software art. The invention may also be implemented by the preparation of application specific integrated circuits whereby interconnecting an appropriate network of conventional computer circuits, as will be readily apparent to those skilled in the art.

Any portion of the present invention implemented on a general purpose digital computer or microprocessor includes a computer program product which is a storage medium including instructions which can be used to program a computer to perform a process of the invention. The storage medium can include, but is not limited to, any type of disk including floppy disk, optical disk, CD-ROMs, and magneto-optical disks, ROMs, RAMs, EPROMs, EEPROMs, magnetic or optical cards, or any type of media suitable for storing electronic instructions.

Obviously, numerous modifications and variations of the present invention are possible in light of the above teachings. It is therefore to be understood that within the scope of the appended claims, the invention may be practiced otherwise than as specifically described herein.

## Claims

1. A printer (8) comprising:
a receiving module (18) configured to receive from an e-mail server an electronic mail having at least one attachment in one of a set of application formats;
a downloading module (18) configured to download from said email server the at least one attachment of the e-mail received by said receiving module;
a converting module (20) configured to convert the at least one attachment downloaded by the downloading module from an application format; and
a printing module (24) configured to print the at least one attachment converted into a printing data language format;
**characterised in that**:
the converting module is configured to convert the at least one attachment into the printing data language format; and by:
a determining module (19) configured to determine whether or not the at least one attachment can be converted using the converting module of the printer; and
a HTTPS module (44) configured to transfer the at least one attachment to/from an application service provider (38) external to the printer so as to convert the at least one attachment into the printing data language format if the determining module determines the at least one attachment cannot be converted by the converting module (20).

2. The printer according to claim 1, wherein the application format is one of WORDPERFECT, MICROSOFT WORD, and EXCEL, and
wherein the printer data language is one of POSTSCRIPT, and Printer Control Language.

3. The printer according to claim 1 or 2, further comprising:
a decoding module (14) configured to decode the downloaded attachment from an e-mail format to said application format.

4. The printer according to claim 3, wherein the receiving and downloading modules (18) use a post office protocol to receive and download the at least one attachment, and
wherein the decoding module (14) uses multipurpose Internet mail extensions to decode the downloaded attachment.

5. The printer according to claim 1, 2, 3 or 4 wherein the printing module comprises:
a print job transfer module (22) configured to transfer the at least one attachment as a print request to a print daemon running on the printer such that the at least one attachment is printed using a print interpreting module included with the printer.

6. The printer according to claim 1, 2, 3, 4 or 5, wherein the printing module transfers the at least one attachment directly to a print interpreting module included with the printer to print the at least one attachment.

7. A printer according to any one of the preceding claims, wherein the HTTPS module (44) uses a hypertext transfer secure protocol to transfer the at least one attachment to/from the application service provider external to the printer.

8. The printer according to any one of the preceding claims, further comprising: a status monitoring module (12, 16) configured to monitor a status of a print request corresponding to the at least one attachment included in the electronic e-mail, and configured to notify a user who sent the electronic e-mail whether or not the print request was successful.

9. The printer according to claim 9, wherein the status monitoring module uses a simple mail transfer protocol to notify the user about whether or not the print request was successful.

10. A method of printing comprising:
receiving, via a printer (8), an electronic e-mail including at least one attachment in one of a set of application formats supported by said printer from an e-mail server;
downloading, via the printer, from the e-mail server, the at least one attachment to the e-mail received by the printer;
converting, via the printer, the at least one attachment downloaded by the printer from an application format; and
printing, via the printer, the at least one attachment converted by the printer into a PDL format; **characterised in that**:
the at least one attachment is converted into the printing data language (PDL) format; and by:
determining, via the printer, whether or not the at least one attachment can be converted by the converting step; and
transferring the at least one attachment to/from an application service provider external to the printer so as to convert the at least one attachment into the printing data language format if the determining step determines that the at least one attachment can not be converted by the converting step.

11. The printing method according to claim 10, wherein the application format is one of WORDPERFECT, MICROSOFT WORD, and EXCEL, and
wherein the PDL is one of POSTSCRIPT, and Printer Control Language.

12. The printing method according to claim 10 or 11, further comprising:
decoding, via the printer, the downloaded attachment from an e-mail format to said application format.

13. The printing method according to claim 12, wherein the receiving and downloading steps use a post office protocol to receive and download the at least one attachment, and
wherein the decoding step uses multipurpose Internet mail extensions to decode the downloaded attachment.

14. The printing method according to claim 10, 11, 12 or 13, wherein the printing step comprises:
transferring, via the printer, the at least one attachment as a print request to a print daemon running on the printer such that the at least one attachment is printed using a print interpreting module included with the printer.

15. The printing method according to any one of claims 11 to 14, wherein the printing step transfers the at least one attachment directly to a print interpreting module included with the printer to print the at least one attachment.

16. The printing method according to any one of claims 11 to 15, wherein the converting step uses a hyper text transfer secure protocol to transfer the at least one attachment to/from the application service provider external to the printer.

17. The printing method according to any one of claims 10 to 16, further comprising:
monitoring, via the printer, a status of a print request corresponding to the at least one attachment included in the electronic mail, and notifying a user who sent the electronic mail whether or not the print request was successful.

18. The printing method according to claim 17, wherein the monitoring step uses a simple mail transfer protocol to notify the user about whether or not the print request was successful.

19. A computer program comprising code means that, when executed on a printer, instruct the printer to perform the method of any one of claims 10 to 18.

## Patentansprüche

1. Drucker (8), der umfasst:
ein Empfangsmodul (18), das konfiguriert ist, um von einem Email-Server elektronische Post zu empfangen, die wenigstens einen Anhang in einem Format aus einer Gruppe von Anwendungsformaten besitzt;
ein Herunterlademodul (18), das konfiguriert ist, um von dem Email-Server den wenigstens einen Anhang der durch das Empfangsmodul empfangenen Email herunter zu laden;
ein Umsetzungsmodul (20), das konfiguriert ist, um den durch das Herunterlademodul heruntergeladenen wenigstens einen Anhang von einem Anwendungsformat umzusetzen; und
ein Druckmodul (24), das konfiguriert ist, um den wenigstens einen Anhang, der in ein Druckdatensprachformat umgesetzt worden ist, zu drucken;
**dadurch gekennzeichnet, dass**:
das Umsetzungsmodul konfiguriert ist, um den wenigstens einen Anhang in das Druckdatensprachformat umzusetzen; und
ein Bestimmungsmodul (19) vorgesehen ist, das konfiguriert ist, um zu bestimmen, ob der wenigstens eine Anhang unter Verwendung des Umsetzungsmoduls des Druckers umgesetzt werden kann oder nicht; und
ein HTTPS-Modul (44) vorgesehen ist, das konfiguriert ist, um den wenigstens einen Anhang zu/von einem Anwendungsdienstanbieter (38) außerhalb des Druckers zu übertragen, um so den wenigstens einen Anhang in das Druckdatensprachformat umzusetzen, falls das Bestimmungsmodul bestimmt, dass der wenigstens eine Anhang durch das Umsetzungsmodul (20) nicht umgesetzt werden kann.

2. Drucker nach Anspruch 1, wobei das Anwendungsformat eines der Folgenden ist: WORDPERFECT, MICROSOFT WORD und EXCEL und
wobei die Druckdatensprache eine der Folgenden ist: POSTSCRIPT und Printer Control Language.

3. Drucker nach Anspruch 1 oder 2, der ferner umfasst:
ein Decodierungsmodul (14), das konfiguriert ist, um den heruntergeladenen Anhang von einem Email-Format in das Anwendungsformat zu decodieren.

4. Drucker nach Anspruch 3, wobei das Empfangs- und das Herunterlademodul (18) ein Post-Office-Protokoll verwenden, um den wenigstens einen Anhang zu empfangen und herunter zu laden, und
wobei das Decodierungsmodul (14) universelle Internet-Mail-Erweiterungen verwendet, um den heruntergeladenen Anhang zu decodieren.

5. Drucker nach Anspruch 1, 2, 3 oder 4, wobei das Druckmodul umfasst:
ein Druckjob-Übertragungsmodul (22), das konfiguriert ist, um den wenigstens einen Anhang als eine Druckanforderung zu einem Druck-Dämon zu übertragen, der auf dem Drucker läuft, derart, dass der wenigstens eine Anhang unter Verwendung eines Druckinterpretationsmoduls, das in dem Drucker enthalten ist, gedruckt wird.

6. Drucker nach Anspruch 1, 2, 3, 4 oder 5, wobei das Druckmodul den wenigstens einen Anhang direkt zu einem Druckinterpretationsmodul, das in dem Drucker enthalten ist, überträgt, um den wenigstens einen Anhang zu drucken.

7. Drucker nach einem der vorhergehenden Ansprüche, wobei das HTTPS-Modul (44) ein Hypertext-Übertragungssicherheitsprotokoll verwendet, um den wenigstens einen Anhang zu/von dem Anwendungsdienstanbieter außerhalb des Druckers zu übertragen.

8. Drucker nach einem der vorhergehenden Ansprüche, der ferner umfasst: ein Statusüberwachungsmodul (12, 16), das konfiguriert ist, um einen Status einer Druckanforderung zu überwachen, die dem wenigstens einen in der elektronischen Email enthaltenen Anhang entspricht, und konfiguriert ist, um einem Anwender, der die elektronische Email gesendet hat, zu melden, ob die Druckanforderung erfolgreich war oder nicht.

9. Drucker nach Anspruch 9, wobei das Statusüberwachungsmodul ein einfaches Mail-Übertragungsprotokoll verwendet, um dem Anwender zu melden, ob die Druckanforderung erfolgreich war oder nicht.

10. Druckverfahren, das umfasst:
Empfangen einer elektronischen Email von einem Email-Server durch einen Drucker (8), wobei die Email wenigstens einen Anhang in einem Format aus einer Gruppe von Anwendungsformaten enthält, die durch den Drucker unterstützt werden;
Herunterladen des wenigstens einen Anhangs der von dem Drucker empfangenen Email von dem Email-Server über den Drucker;
Umsetzen des wenigstens einen durch den Drucker heruntergeladenen Anhangs durch den Drucker von einem Anwendungsformat; und
Drucken des wenigstens einen Anhangs, der durch den Drucker in ein PDL-Format umgesetzt worden ist, durch den Drucker; **dadurch gekennzeichnet, dass**:
der wenigstens eine Anhang in das Druckdatensprachformat (PDL-Format) umgesetzt wird; und dass es die folgenden Schritte umfasst:
Bestimmen mittels des Druckers, ob der wenigstens eine Anhang durch den Umsetzungsschritt umgesetzt werden kann; und
Übertragen des wenigstens einen Anhangs zu/von einem Anwendungsdienstanbieter außerhalb des Druckers, um so den wenigstens einen Anhang in das Druckdatensprachformat umzusetzen, falls der Bestimmungsschritt bestimmt, dass der wenigstens eine Anhang durch den Umsetzungsschritt nicht umgesetzt werden kann.

11. Druckverfahren nach Anspruch 10, wobei das Anwendungsformat eines der folgenden Formate ist: WORDPERFECT, MICROSOFT WORD und EXCEL und
wobei die PDL entweder POSTSCRIPT oder Printer Control Language ist.

12. Druckverfahren nach Anspruch 10 oder 11, das ferner umfasst:
Decodieren des heruntergeladenen Anhangs mittels des Druckers von einem Email-Format in das Anwendungsformat.

13. Druckverfahren nach Anspruch 12, wobei der Empfangs- und der Herunterladeschritt ein Post-Office-Protokoll verwenden, um den wenigstens einen Anhang zu empfangen und herunterzuladen, und
wobei der Decodierungsschritt universelle Internet-Mail-Erweiterungen verwendet, um den heruntergeladenen Anhang zu decodieren.

14. Druckverfahren nach Anspruch 10, 11, 12 oder 13, wobei der Druckschritt umfasst:
Übertragen des wenigstens einen Anhangs als eine Druckanforderung mittels des Druckers zu einem Druck-Dämon, der auf dem Drucker läuft, derart, dass der wenigstens eine Anhang unter Verwendung eines Druckinterpretationsmoduls, das in dem Drucker enthalten ist, gedruckt wird.

15. Druckverfahren nach einem der Ansprüche 11 bis 14, wobei der Druckschritt den wenigstens einen Anhang direkt zu einem Druckinterpretationsmodul, das in dem Drucker enthalten ist, überträgt, um den wenigstens einen Anhang zu drucken.

16. Druckverfahren nach einem der Ansprüche 11 bis 15, wobei der Umsetzungsschritt ein Hypertext-Übertragungssicherheitsprotokoll verwendet, um den wenigstens einen Anhang zu/von dem Anwendungsdienstanbieter außerhalb des Druckers zu übertragen.

17. Druckverfahren nach einem der Ansprüche 10 bis 16, das ferner umfasst:
Überwachen eines Status einer Druckanforderung, die dem wenigstens einen in der elektronischen Post enthaltenen Anhang entspricht, mittels des Druckers und einem Anwender, der die elektronische Post gesendet hat, Melden, ob die Druckanforderung erfolgreich war oder nicht.

18. Druckverfahren nach Anspruch 17, wobei der Überwachungsschritt ein einfaches Mail-Übertragungsprotokoll verwendet, um dem Anwender zu melden, ob die Druckanforderung erfolgreich war oder nicht.

19. Computerprogramm, das Codemittel enthält, die dann, wenn sie auf einem Drucker ausgeführt werden, den Drucker anweisen, das Verfahren nach einem der Ansprüche 10 bis 18 auszuführen.

## Revendications

1. Imprimante (8) comprenant :
un module (18) de réception configuré pour recevoir en provenance d'un serveur de courrier électronique un courrier électronique ayant au moins une pièce jointe dans un parmi un ensemble de formats d'applications ;
un module (18) de téléchargement configuré pour télécharger à partir dudit serveur de courrier électronique, ladite au moins une pièce jointe du courrier électronique reçu par ledit module de réception ;
un module (20) de conversion configuré pour convertir ladite au moins une pièce jointe téléchargée par le module de téléchargement, à partir d'un format d'application ; et
un module (24) d'impression configuré pour imprimer ladite au moins une pièce jointe convertie dans un format de langage de données d'impression ;
**caractérisée en ce que** :
le module de conversion est configuré pour convertir ladite au moins une pièce jointe dans le format de langage de données d'impression ; et par :
un module de détermination (19) configuré pour déterminer si ladite au moins une pièce jointe peut ou non être convertie au moyen du module de conversion de l'imprimante ; et
un module (44) HTTPS configuré pour transférer ladite au moins une pièce jointe vers/depuis un fournisseur (38) de services d'applications extérieur à l'imprimante, de façon à convertir ladite au moins une pièce jointe dans le format de langage de données d'impression, si le module de détermination détermine que ladite au moins une pièce jointe ne peut pas être convertie par le module (20) de conversion.

2. Imprimante selon la revendication 1, dans laquelle le format d'application est l'un parmi WORDPERFECT, MICROSOFT WORD et EXCEL, et
dans laquelle le langage de données de l'imprimante est l'un parmi POSTSCRIPT et Printer Control Language.

3. Imprimante selon la revendication 1 ou 2, comprenant, en outre :
un module de décodage (14) configuré pour décoder la pièce jointe téléchargée, depuis un format de courrier électronique vers ledit format d'application.

4. Imprimante selon la revendication 3, dans laquelle les modules (18) de réception et de téléchargement utilisent un protocole POP pour recevoir et télécharger ladite au moins une pièce jointe, et
dans laquelle le module de décodage (14) utilise des extensions de courrier Internet à usages multiples pour décoder la pièce jointe téléchargée.

5. Imprimante selon la revendication 1, 2, 3 ou 4, dans laquelle le module d'impression comprend :
un module (22) de transfert de tâche d'impression configuré pour transférer ladite au moins une pièce jointe, sous forme de requête d'impression, vers un démon d'impression s'exécutant sur l'imprimante, de façon à ce que ladite au moins une pièce jointe soit imprimée à l'aide d'un module d'interprétation d'impression associé à l'imprimante.

6. Imprimante selon la revendication 1, 2, 3, 4 ou 5, dans laquelle le module d'impression transfère ladite au moins une pièce jointe directement vers un module d'interprétation d'impression associé à l'imprimante pour imprimer ladite au moins une pièce jointe.

7. Imprimante selon l'une quelconque des revendications précédentes, dans laquelle le module (44) HTTPS utilise un protocole sécurisé de transfert hypertexte pour transférer ladite au moins une pièce jointe vers/depuis le fournisseur de services d'applications extérieur à l'imprimante.

8. Imprimante selon l'une quelconque des revendications précédentes, comprenant, en outre :
un module (12, 16) de surveillance d'état configuré pour surveiller un état d'une requête d'impression correspondant à ladite au moins une pièce jointe incluse dans le courrier électronique, et configuré pour notifier à un utilisateur qui a envoyé le courrier électronique, le succès ou l'échec de la requête d'impression.

9. Imprimante selon la revendication 8, dans laquelle le module de surveillance d'état utilise un protocole de transfert de courrier simple pour notifier à l'utilisateur le succès ou l'échec de la requête d'impression.

10. Procédé d'impression comprenant :
la réception, par le biais d'une imprimante (8), d'un courrier électronique comprenant au moins une pièce jointe, dans l'un parmi un ensemble de formats d'applications pris en charge par ladite imprimante, en provenance d'un serveur de courrier électronique ;
le téléchargement, par le biais de l'imprimante, depuis le serveur de courrier électronique, de ladite au moins une pièce jointe du courrier électronique reçu par l'imprimante ;
la conversion, par le biais de l'imprimante, de ladite au moins une pièce jointe téléchargée par l'imprimante, à partir d'un format d'application ; et
l'impression, par le biais de l'imprimante, de ladite au moins une pièce jointe convertie par l'imprimante dans un format PDL ; **caractérisé en ce que** :
ladite au moins une pièce jointe est convertie dans le format de langage de données d'impression (PDL) ; et par :
la détermination, par le biais de l'imprimante, de ce que ladite au moins une pièce jointe peut être convertie ou non par l'étape de conversion ; et
le transfert de ladite au moins une pièce jointe vers/depuis un fournisseur de services d'applications extérieur à l'imprimante, de façon à convertir ladite au moins une pièce jointe, dans le format de langage de données d'impression, si l'étape de détermination détermine que ladite au moins une pièce jointe ne peut pas être convertie par l'étape de conversion.

11. Procédé d'impression selon la revendication 10, dans lequel le format d'application est l'un parmi WORDPERFECT, MICROSOFT WORD et EXCEL, et
dans lequel le PDL est l'un parmi POSTSCRIPT et Printer Control Language.

12. Procédé d'impression selon la revendication 10 ou 11, comprenant, en outre :
le décodage, par le biais de l'imprimante, de la pièce jointe téléchargée, depuis un format de courrier électronique vers ledit format d'application.

13. Procédé d'impression selon la revendication 12, dans lequel les étapes de réception et de téléchargement utilisent un protocole POP pour recevoir et télécharger ladite au moins une pièce jointe, et
dans lequel l'étape de décodage utilise des extensions de courrier Internet à usages multiples pour décoder la pièce jointe téléchargée.

14. Procédé d'impression selon la revendication 10, 11, 12 ou 13, dans lequel l'étape d'impression comprend :
le transfert, par le biais de l'imprimante, de ladite au moins une pièce jointe sous forme de requête d'impression, vers un démon d'impression s'exécutant sur l'imprimante, de façon à imprimer ladite au moins une pièce jointe, à l'aide d'un module d'interprétation d'impression associé à l'imprimante.

15. Procédé d'impression selon l'une quelconque des revendications 11 à 14, dans lequel l'étape d'impression transfère ladite au moins une pièce jointe directement vers un module d'interprétation d'impression associé à l'imprimante pour imprimer ladite au moins une pièce jointe.

16. Procédé d'impression selon l'une quelconque des revendications 11 à 15, dans lequel l'étape de conversion utilise un protocole sécurisé de transfert hypertexte pour transférer ladite au moins une pièce jointe depuis/vers le fournisseur de services d'applications extérieur à l'imprimante.

17. Procédé d'impression selon l'une quelconque des revendications 10 à 16, comprenant, en outre :
la surveillance, par le biais de l'imprimante, d'un état d'une requête d'impression correspondant à ladite au moins une pièce jointe incluse dans le courrier électronique, et la notification à l'utilisateur qui a envoyé le courrier électronique, du succès ou de l'échec de la requête d'impression.

18. Procédé d'impression selon la revendication 17, dans lequel l'étape de surveillance utilise un protocole de transfert de courrier simple pour notifier à l'utilisateur le succès ou l'échec de la requête d'impression.

19. Programme d'ordinateur comprenant un moyen formant code qui, lorsqu'il est exécuté sur une imprimante, ordonne à l'imprimante d'exécuter le procédé selon l'une quelconque des revendications 10 à 18.
